# EUROPEAN PATENT SPECIFICATION

(11) **EP 1 130 330 B1**
(45) Date of publication and mention of the grant of the patent: **05.07.2006**
(21) Application number: 01200417.2
(22) Date of filing: 05.02.2001
(51) Int. Cl.: F24D 19/10, F24D 19/00

(54) **Method for frost protection of a solar heater**
Verfahren zum Schutz vor Frost einer Solarheizung
Procédé à protection contre la gelée d'un réchauffeur solaire

(30) Priority: 07.02.2000 NL 1014305
(43) Date of publication of application: 05.09.2001
(73) Proprietor: Inventum Holding B.V., NL-3721 BC Bilthoven (NL)
(72) Inventor: Klein Horsman, Jan Willem, 6661 BJ Elst (NL)
(74) Representative: Iemenschot, Johannes Andreas

(56) References cited:
- EP-A- 0 347 124
- GB-A- 2 117 436
- GB-A- 2 201 483
- US-A- 4 176 761
- US-A- 4 246 886
- US-A- 4 935 603
- US-A- 5 823 177

## Description

The invention relates to a method for frost protection of a solar heater comprising at least one storage tank for heated water, which storage tank is provided with a supply pipe for water to be heated and a discharge pipe for heated water.

In a prior art solar heater of the type referred to in the introduction, which is disclosed in US-A-5823177, frost protection is provided by draining of the collector and its associated components. Instead of draining, incoming water may be permitted to slowly flow through the solar passageway to displace water that is close to freezing.

EP-A-0347124 discloses a method for preventing the freezing of liquid in a pipe. Electrical resistance wires are passed through the pipe in which freezing of liquid has to be prevented. An electrical current is supplied to the wires to generate heat within the pipe according to a sensed temperature.

The object of the invention is to provide an improved method for frost protection of a solar heater.

In order to accomplish that objective, the method according to the invention is characterized in that electric heating means are provided which are periodically activated to defrost the supply pipe and/or the discharge pipe of the storage tank.

The operation of the solar heater according to the invention is based on the principle that heat is supplied to the supply pipe and/or the discharge pipe of the storage tank for short periods only, as a result of which said pipes are defrosted at least periodically. The moment said pipes are defrosted, a pressure which has built up in the storage tank as a result of ice having formed therein can be reduced as a result of water flowing out.

Whilst the prior art approach was to prevent the water in the solar heater from freezing, the approach in accordance with the present invention is to periodically release the pressure increase resulting from the freezing of the water and the related expansion via the supply pipe and/or the discharge pipe, which is (are) periodically defrosted for that purpose. The discharge of the excess water can for example take place via a well-known pressure safety valve, to which the storage tank is connected.

The method according to the invention makes it possible to prevent an excessive pressure build-up in the storage tank due to expanding ice. When the pressure that has built up is released periodically, by defrosting the pipe in question at regular intervals, freezing of the storage tank will not lead to damage being caused thereto.

In a preferred embodiment, the electrical heating means are controlled by a control unit, which is connected to a temperature sensor. The control unit activates the electric heating means on the basis of the measured temperature.

The temperature sensor can measure the temperature of the most critical supply pipe or discharge pipe, that is, the pipe that is the first to reach a temperature so low that the water present therein will freeze. It is also possible, however, for the temperature sensor to measure the ambient temperature. According to another possibility, a temperature related to the ambient temperature is measured at a different location in the solar heater.

The control unit may be integrated in the solar heater, but it may also be disposed outside the solar heater. A control unit which is located outside the solar heater is advantageous in connection with the replacing of vulnerable parts or parts that are liable to break down.

In a preferred embodiment of the method according to the invention, the control unit furthermore controls the time during which the electric heating means are activated and/or the time interval between successive periods of activation on the basis of the signal from the temperature sensor. By way of example, a control arrangement can be mentioned wherein the electric heating means are activated for 15 minutes every 5 hours at ambient temperatures lower than 0°C. If the temperature sinks below -10°C, the time interval between successive periods of activation is reduced to 2 hours, whilst the duration of the activation is increased to 30 minutes. At temperatures below -15°C, the heating means are even activated continuously.

The use of a control unit provides various additional possibilities. Thus, the control unit may deliver a warning signal, for example an acoustic or an optical signal, when the signal from the temperature sensor does not fall within a predetermined probability range. In practice this means that a warning signal will be delivered if the measured is higher or lower than considered possible.

Furthermore the control unit may deliver a warning signal, for example an acoustic or an optical signal, if no signal indicating a temperature increase is received from the temperature sensor after activation of the electric heating means. In such a case either the electric heating means or the temperature sensor is defective.

According to another possibility the control unit includes means for storing electric energy, such as a capacitor or the like, which can be connected to warning means in case of an interruption of the power supply to the solar heater. In this manner it is possible, in spite of a power failure, to generate a warning signal to indicate that the electric heating means are no longer functioning, which may be important during periods of frost.

Numerous embodiments of the electric heating means are possible. For example, well-known heating ribbons or pipe heating elements can be used, which are fixed to the pipes in question. Important is only the fact that said electric heating means are capable of supplying sufficient energy to the pipes for defrosting the pipes even under the most extreme conditions. In a specific example it must thus be possible to supply heat in an amount of 10 - 50 Watt to a pipe.

In an alternative embodiment of the invention, however, the electric heating means consist of a high-capacity heating rod, which is disposed in the pipe in question. When a heating rod having a capacity ranging between a few hundred to several thousand Watt is fitted, for example, the electric heating means can also be used for maintaining the temperature inside the solar heater when there is no sunshine for a prolonged period of time. Such an embodiment is in particular advantageous if the solar heater is used in regions with a hot, sunny climate, where separate reheaters, which are known per se, are not used.

Since according to the invention the pipes in question are periodically defrosted and consequently there may be periods during which water cannot flow through the pipes in question and through the storage tank due to freezing, the solar heater requires the use of a properly functioning automatic mixing device, which is known per se, or a valve actuated by a pressure difference, which enables a by-pass flow when the flow through the storage tank is obstructed. As is well-known, the pressure at which such a valve or automatic mixing device opens must be well above the normal pressure drop that occurs when water is tapped from the storage tank.

For safety reasons, a solar heater generally includes an automatic mixing device, which functions to prevent too hot water from the solar heater flowing directly out of the tapping point (tap). Most types of automatic mixing devices always admix a small amount of cold water, so that it is preferable in those cases to use a valve which is actuated by a pressure difference. In such a case the automatic mixing device is disposed after the reheater, where the mixing device functions to provide comfort as well as safety.

Since the method according to the present invention allows periodic freezing of the pipes in question, it is advantageous when the respective supply pipes and/or discharge pipes are fitted with facilities to prevent said pipes from cracking as a result of freezing over. Said facilities may consist, among other things, of compressible bodies, such as rubber hoses or the like, fitted in the pipes in question. When ice is formed, said compressible bodies are compressed, without the pipes in question expanding thereby.

Alternatively, the pipes in question may be so designed that when ice is formed, said ice is led to the storage tank. Think in this connection of pipes designed so that they are slightly flared towards their ends. Furthermore it is advantageous when the pipes in question are designed to have a limited length.

With a solar heater of the type to which the invention relates, the supply pipe and discharge pipes frequently extend some distance into the respective storage tank. This is a consequence of the fact that the ends of the pipes in question are fitted with flow facilities which are to prevent too much cold water being mixed with hot water present in the storage tank. When pipes are frozen, the defrosting of the parts of said pipes extending into the storage tank may take some time, which involves increased energy costs. According to a special embodiment of the invention it is therefore proposed to form small openings in the supply and discharge pipes directly adjacent to the inside wall of the storage tank. Once the pipe in question has defrosted until said small openings, a pressure relief of the storage tank can take place already, without complete defrosting of the pipe in question being necessary. The influence of such small openings on the normal flow is hardly noticeable, if at all.

According to another possibility, the electric heating means are adapted for preventing the pipes in question from freezing. This can be effected by a careful selection both of the time interval between successive periods of activation of the heating means and of the duration of said activation. In that case water will flow through the pipes each time water is tapped, which by itself is already a good method for preventing the formation of ice, since fresh water having a temperature ranging between about 2°C and about 20°C is supplied each time water is tapped.

This concept provides a number of advantages, among which the fact that it is no longer necessary to use a by-pass valve, that an extra warning function is provided to signal that something is amiss when the electric heating means are no longer functioning and hot tap water is not available, and that the pressure will not run up any more under normal circumstances.

Within this framework, albeit not limited thereto, it is therefore advantageous if the storage tank wall consists of a material having a very low thermal conductivity at the location where the supply and discharge pipes pass through said wall. When the storage tank itself consists of copper, for example, the part in question of the storage tank can be made in stainless steel. Stainless steel has a thermal conduction coefficient of 27 W/mK, whilst that of copper is 360 W/mK.

Preferably, the ends of the supply and discharge pipes located within the storage tank are disposed at a higher level than the parts of said pipes outside the tank. The object of such an embodiment is twofold. Owing to the difference in height, cold water in said pipes can hardly mix with hot water in the storage tank, if at all, since the specific weight of hot water is lower than that of cold water, as a result of which said hot water will take up a higher position. At temperatures below 4°C, the reverse effects occurs. Water having a temperature of 4°C has a higher density than water having a temperature of 0°C, as a result of which it will sink to a lower position. This means that when the temperature at the location of the pipe parts outside the storage tank has dropped to a level around 0°C, the water having that temperature, which is present in the pipes at that location, will be displaced by the slightly hotter water having a higher density. In this manner the actual moment of freezing is postponed to a considerable degree.

Such an embodiment of the solar heater is in particular advantageous if it comprises a vacuum insulated, double-walled tank.

As already noted before, the method according to the invention allows freezing of the storage tank. As a consequence of this, the pressure within the storage tank is temporarily increased owing to the fact that water is turned into ice. In order to prevent the tank from collapsing as a consequence of this, it may be advantageous to fit the storage tank with facilities that enable plastic expansion thereof, such as corrugated, ridged or accordion wall profiles. The storage tank can deform at the location of said wall profiles, so that the expansion of the ice can be accommodated.

In such a case it is furthermore advantageous if the solar heater includes means for indicating possible plastic deformation of the storage tank. After all, such plastic expansion has not caused the tank to collapse, it is true, but generally it will be necessary to replace the storage tank in such a case.

A final variant of an embodiment of the solar heater is one wherein the solar heater comprises a number of storage tanks arranged in series, which are interconnected by means of connecting pipes, which connecting pipes form the respective supply pipes and discharge pipes for successive storage tanks. With such an variant, also the connecting pipes are defrosted at least periodically in the above-described manner by means of electric heating elements.

The invention will now be explained in more detail with reference to the drawing, which shows a number of embodiments of the solar heater to which the invention relates.
Fig. 1 schematically shows an embodiment of the solar heater to which the invention relates; and
Fig. 2 is a sectional view, likewise schematically and to a larger scale, a detail of another embodiment of the solar heater to which the invention relates.

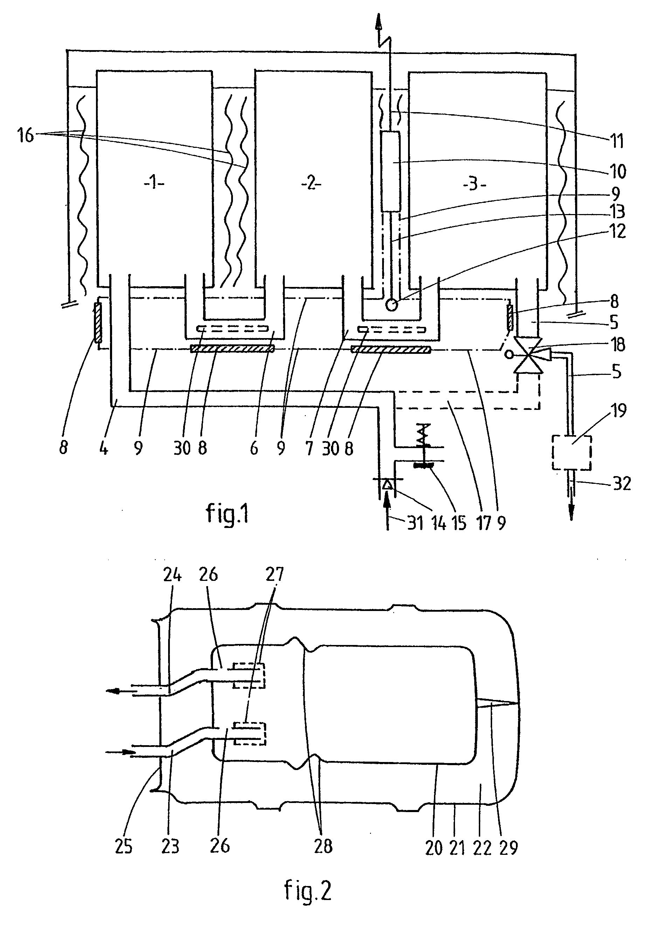

Fig. 1 shows a solar heater comprising three storage tanks 1, 2 and 3 arranged in series. A supply pipe 4 for water to be heated opens into storage tank 1, whilst a discharge pipe 5 for heated water exits the storage tank 3. Connecting pipes 6 and 7 are used for creating a connection between tanks 1, 2 and 2, 3, respectively.

It can be noted that the connecting pipe 6 functions as a discharge pipe for storage tank 1 and as a supply pipe for tank 2; connecting pipe 7 similarly functions as a discharge pipe for storage tank 2 and as a supply pipe for storage tank 3.

Electric heating means 8 are fixed to pipes 4 - 7. Said electric heating means are connected in series via a conductor 9 (illustrated in a chain-dotted line), which furthermore connects said electric heating means to a control unit 10.

Control unit 10 is connected to the electric mains by means of a conductor 11. Furthermore, a temperature sensor 12 is connected to control unit 10 by means of a signal line 13.

Supply pipe 4 is fitted with a non-return valve 14 and with a pressure safety valve 15.

The assembly of electric heating elements 8, control unit 10 and temperature sensor 12 forms a frost protection system for the illustrated solar heater, which operates as follows.

Also when storage tanks 1, 2 and 3 are optimally insulated (for example by means of an insulation material 16 consisting of mineral wool, hard or soft foam or a vacuum cavity), ice may form in storage tanks 1, 2 and 3 and in pipes 4 - 7 during a period of frost. The electric heating means 8 are periodically activated under the control of the control unit 10, as a result of which said pipes will be defrosted. As a result of this, an elevated pressure that has built up in the storage tanks 1, 2 and 3 as a result of ice being formed therein can be reduced by discharging water via the aforesaid pipes. The discharge of said excess water can take place via pressure safety valve 15, for example.

Temperature sensor 12 is located at a position which enables a proper control of the period during which the electric heating means 8 are activated on the one hand and of the time interval between successive periods of activation on the other hand on the basis of the temperature registered by said sensor.

Consequently, there is a possibility of the pipes 4 - 7 being blocked at least partially due to freezing during the time interval between successive periods of activation of the electric heating means 8. In order to enable a flow of water from the water source (31) to the tapping point (32) yet, a by-pass 17 may be present between supply pipe 4 and discharge pipe 5, which is connected to discharge pipe 5 at the location of an automatic mixing device or differential pressure valve 18. Furthermore, a reheater 19 may be disposed in the discharge pipe.

When the electric heating means are controlled in such a manner that freezing of the aforesaid pipes is prevented at all times, such a bypass 17 and possibly a differential pressure valve 18 are not needed.

In the illustrated embodiment the capacity of the electric heating means 8 must be sufficient to defrost the pipes in question. It is also conceivable, however, for the electric heating means to have a much larger capacity, so that they can also be used for heating the water present in storage tanks 1, 2 and 3 or for maintaining a desired temperature during periods when there is no sunshine.

In principle, the solar heater fitted with a frost protection arrangement as shown in Fig. 1 allows the water in a storage tank 1, 2 or 3 to freeze completely. By defrosting the supply and discharge pipes regularly, the pressure increase that occurs inside the tanks (as a result of the expansion of the ice) can be kept within specified bounds.

Fig. 2 is a larger-scale view of an embodiment of a storage tank. The illustrated storage tank includes an inner tank 20, which is located within an outer tank 21. In the main, a vacuum prevails in the space 22 between the two tanks. A supply pipe 23 and a discharge pipe 24 extend through a cover 25 of outer tank 21 and through vacuum space 22 to the interior of inner tank 20. As is shown in the figure, the ends of pipes 23 and 24 located within inner tank 20 are positioned higher than the parts of said pipes that are located outside said tank. When heated water is present in inner tank 20, said water will hardly mix, if at all, with the colder water in pipes 23 and 24, since the hotter water has a lower density and consequently exhibits a tendency to rise.

At temperatures below 4°C the reverse effect occurs. The water in the parts of pipes 23 and 24 at the location of cover 25 of outer tank 21 cools down towards a temperature of 0°C. Water having a temperature of 4°C has a higher density and is heavier, however. Said hotter water is present at a higher level in the direction of inner tank 20, and as a consequence of its higher specific weight it will move to a lower level and displace the colder water at the location of cover 25. In this manner the time at which freezing takes place at cover 25 is delayed.

As is furthermore shown in Fig. 2, supply pipe 23 and discharge pipe 24 are provided with openings 26, which connect directly to the inner wall of inner tank 20. Such openings 26 are advantageous when the pipes 23 and 24 in question extend some distance within inner tank 20, for example owing to the presence of the flow facilities 27 that are illustrated in dotted lines. In order to enable pressure relief of the inner tank 20, a flow connection through the pipes in question must be created. If openings 26 would not be present, the parts of said pipes 23 and 24 located within the inner tank would have to be entirely defrosted in order to enable this. Since said parts have a substantial length, this would require a considerable period of time. Since the openings 26 are provided, however, pipes 23 and 24 only need to be defrosted until said openings in order to enable a pressure relief of inner tank 20.

Cover 25 of outer tank 21 may be made of another material than the remaining part of the outer tank 21, for example of stainless steel instead of copper. Stainless steel has a lower thermal conduction coefficient, so that pipes 23 and 24 will cool down less quickly at the location of cover 25 during periods of frost.

Finally, the figure shows that inner tank 20 comprises a wall profile 28 (schematically indicated). In extreme conditions, said wall profile will allow plastic deformation of inner tank 20 so as to accommodate the expansion of the frozen water. Possibly, means for providing an external indication of such a plastic expansion can be provided. Such means are schematically indicated by a sharp tip 29 which, upon extension of inner tank 20, forms a dent in the outer tank 21, which is visible from the outside.

In principle, the frost protection arrangement that is described herein allows the connecting pipes, such as pipes 6 and 7 in Fig. 1, to freeze completely. In order to prevent said pipes from being damaged in such a case, compressible bodies 30 (schematically indicated in Fig. 1) may be present in said pipes, which compressible bodies are capable of accommodating, by being compressed, expansion caused by freezing water.

## Claims

1. Method for frost protection of a solar heater comprising at least one storage tank (1; 2; 3) for heated water, which storage tank is provided with a supply pipe (4; 6; 7) for water to be heated and a discharge pipe (6; 7; 5) for heated water, **characterized in that** electric heating means (8) are provided which are periodically activated to defrost the supply pipe (4; 6; 7) and/or the discharge pipe (6; 7; 5) of the storage tank (1; 2; 3).

2. Method according to claim 1, **characterized in that** the electric heating means (8) are controlled by a control unit, (10), which is connected to a temperature sensor (12).

3. Method according to claim 2, **characterized in that** the temperature sensor (12) measures the temperature of the most critical supply pipe (4; 6; 7) or discharge pipe (6; 7; 5).

4. Method according to claim 2, **characterized in that** the temperature sensor (12) measures the ambient temperature.

5. Method according to any one of the claims 2 - 4, **characterized in that** the control unit (10) is integrated in the solar heater.

6. Method according to any one of the claims 2 - 5, **characterized in that** the control unit (10) controls the time during which the electric heating means (8) are activated and/or the time interval between successive periods of activation on the basis of the signal from the temperature sensor (12).

7. Method according to any one of the claims 2 - 6, **characterized in that** the control unit (10) delivers a warning signal, for example an acoustic or an optical signal, when the signal from the temperature sensor does not fall within a predetermined probability range.

8. Method according to any one of the claims 2 - 7, **characterized in that** the control unit (10) delivers a warning signal, for example an acoustic or an optical signal, if no signal indicating a temperature increase is received from the temperature sensor (12) after activation of the electric heating means (8).

9. Method according to any one of the claims 2 - 8, **characterized in that** the control unit (10) includes means for storing electric energy, such as a capacitor or the like, which can be connected to warning means in case of an interruption of the power supply to the solar heater.

10. Method according to any one of the preceding claims, **characterized in that** the electric heating means (8) consist of a high-capacity heating rod. which is disposed in the pipe in question.

11. Method according to any one of the preceding claims, **characterized in that** the respective supply pipes (4; 6; 7) and/or discharge pipes (6; 7; 5) are fitted with facilities to prevent said pipes from cracking as a result of freezing over.

12. Method according to claim 11, **characterized in that** said facilities consist of compressible bodies (30) such as rubber hoses or the like, fitted in the pipes in question.

13. Method according to claim 11, **characterized in that** said facilities consist of the pipes in question being so designed that ice that is formed is led to the storage tank (1; 2; 3).

14. Method according to any one of the preceding claims, **characterized in that** the supply and discharge pipes (23; 24) extend some distance into the respective storage tank, and openings (26) are formed in the supply and discharge pipes (23; 24) directly adjacent to the inside wall of the storage tank.

15. Method according to any one of the preceding claims, **characterized in that** the electric heating means (8) are activated for preventing the pipes in question from freezing.

16. Method according to any one of the preceding claims, **characterized in that** the storage tank wall (25) consists of a material having a very low thermal conductivity at the location where the supply and discharge pipes (23; 24) pass through said wall (25).

17. Method according to any one of the preceding claims, **characterized in that** the ends of the supply and discharge pipes (23; 24) located within the storage tank are disposed at a higher level than the parts of said pipes outside the tank.

18. Method according to any one of the preceding claims, **characterized in that** the storage tank is fitted with facilities (28) that enable plastic expansion thereof, such as corrugated, ridged or accordion wall profiles.

19. Method according to claim 18, **characterized in that** said solar heater comprises means (29) for indicating plastic deformation of the storage tank.

20. Method according to any one of the preceding claims, **characterized in that** said solar heater comprises a number of storage tanks (1; 2; 3) arranged in series, which are interconnected by means of connecting pipes (6; 7), which connecting pipes form the respective supply pipes and discharge pipes for successive storage tanks (1; 2; 3).

## Patentansprüche

1. Verfahren zum Frostschutz eines Solarheizkörpers, der zumindest einen Speichertank (1; 2; 3) für heißes Wasser aufweist, wobei der Speichertank mit einem Zulaufrohr (4; 6; 7) für Wasser, das erhitzt werden soll, und einem Ablaufrohr (6; 7; 5) für erhitztes Wasser versehen ist, **dadurch gekennzeichnet, dass** elektrische Heizmittel (8) vorgesehen sind, die in regelmäßigen Abständen aktiviert werden, um das Zulaufrohr (4; 6; 7) und/oder das Ablaufrohr (6; 7; 5) des Speichertanks (1; 2; 3) zu enteisen.

2. Verfahren nach Anspruch 1, **dadurch gekennzeichnet, dass** die elektrischen Heizmittel (8) von einer Steuereinheit (10) gesteuert werden, die mit einem Temperaturfühler (12) verbunden ist.

3. Verfahren nach Anspruch 2, **dadurch gekennzeichnet, dass** der Temperaturfühler (12) die Temperatur des kritischsten Zulaufrohres (4; 6; 7) oder Ablaufrohres (6; 7; 5) misst.

4. Verfahren nach Anspruch 2, **dadurch gekennzeichnet, dass** der Temperaturfühler (12) die Umgebungstemperatur misst.

5. Verfahren nach einem der Ansprüche 2 - 4, **dadurch gekennzeichnet, dass** die Steuereinheit (10) in den Solarheizkörper integriert ist.

6. Verfahren nach einem der Ansprüche 2 - 5, **dadurch gekennzeichnet, dass** die Steuereinheit (10) die Zeit steuert, während der die elektrischen Heizmittel (8) aktiviert sind und/oder das Zeitintervall zwischen den aufeinanderfolgenden Perioden der Aktivierung, auf Grund des Signals des Temperaturfühlers (12).

7. Verfahren nach einem der Ansprüche 2 - 6, **dadurch gekennzeichnet, dass** die Steuereinheit (10) ein Warnsignal abgibt, beispielsweise ein akustisches oder optisches Signal, wenn das Signal vom Temperaturfühler nicht in einen vorherbestimmten Wahrscheinlichkeitsbereich fällt.

8. Verfahren nach einem der Ansprüche 2 - 7, **dadurch gekennzeichnet, dass** die Steuereinheit (10) ein Warnsignal abgibt, beispielsweise ein akustisches oder optisches Signal, wenn kein Signal, das einen Temperaturanstieg anzeigt, vom Temperaturfühler (12) empfangen wird, nachdem die elektrischen Heizmittel (8) aktiviert sind.

9. Verfahren nach einem der Ansprüche 2 - 8, **dadurch gekennzeichnet, dass** die Steuereinheit (10) Mittel zur Speicherung elektrischer Energie aufweist, wie einen Kondensator oder dergleichen, der mit Warneinrichtungen im Falle einer Unterbrechung der Stromzufuhr zu dem Solarheizkörper verbunden werden kann.

10. Verfahren nach einem der vorhergehenden Ansprüche, **dadurch gekennzeichnet, dass** die elektrischen Heizmittel (8) aus einem Heizstab mit hoher Kapazität bestehen, der in dem fraglichen Rohr angeordnet ist.

11. Verfahren nach einem der vorhergehenden Ansprüche, **dadurch gekennzeichnet, dass** die betreffenden Zulaufrohre (4; 6; 7) und/oder Ablaufrohre (6; 7; 5) mit Einrichtungen ausgestattet sind, die verhindern, dass diese Rohre als Folge des Zufrierens platzen.

12. Verfahren nach Anspruch 11, **dadurch gekennzeichnet, dass** diese Einrichtungen aus zusammendrückbaren Körpern (30), wie Gummischläuchen oder dergleichen, bestehen, die in die fraglichen Rohre eingepasst sind.

13. Verfahren nach Anspruch 11, **dadurch gekennzeichnet, dass** diese Einrichtungen aus den fraglichen Rohren bestehen, die so gebaut sind, dass Eis, das sich gebildet hat, zum Speichertank (1; 2; 3) geleitet wird.

14. Verfahren nach einem der vorhergehenden Ansprüche, **dadurch gekennzeichnet, dass** die Zulauf- und Ablaufrohre (23; 24) etwas in den jeweiligen Speichertank hineinragen, und Öffnungen (26) in den Zulauf- und Ablaufrohren (23; 24) angeordnet sind, die genau neben der inneren Wand des Speichertanks liegen.

15. Verfahren nach einem der vorhergehenden Ansprüche, **dadurch gekennzeichnet, dass** die elektrischen Heizmittel (8) aktiviert werden, um die fraglichen Rohre am Einfrieren zu hindern.

16. Verfahren nach einem der vorhergehenden Ansprüche, **dadurch gekennzeichnet, dass** die Wand (25) des Speichertanks aus einem Material besteht, das sehr niedrige Wärmeleitfähigkeit an dem Ort aufweist, an dem die Zulauf- und Ablaufrohre (23; 24) durch diese Wand (25) treten.

17. Verfahren nach einem der vorhergehenden Ansprüche, **dadurch gekennzeichnet, dass** die Enden der Zulauf- und Ablaufrohre (23; 24), die sich innerhalb des Speichertankes befinden, auf einer höheren Ebene als die Enden dieser Rohre außerhalb des Tankes liegen.

18. Verfahren nach einem der vorhergehenden Ansprüche, **dadurch gekennzeichnet, dass** der Speichertank mit Einrichtungen (28) ausgestattet ist, die dessen plastische Ausdehnung ermöglichen, wie beispielsweise gewellte, gerippte oder ziehharmonikaförmige Wandprofile.

19. Verfahren nach Anspruch 18, **dadurch gekennzeichnet, dass** der Solarheizkörper Mittel (29) aufweist, die anzeigen, ob sich der Speichertank plastisch verformt.

20. Verfahren nach einem der vorhergehenden Ansprüche, **dadurch gekennzeichnet, dass** der Solarheizkörper eine Anzahl von Speichertanks (1; 2; 3) aufweist, die in einer Reihe angeordnet sind und die untereinander durch Verbindungsrohre (6; 7) verbunden sind, wobei die Verbindungsrohre die jeweiligen Zulaufrohre und Ablaufrohre der nachfolgenden Speichertanks (1; 2; 3) bilden.

## Revendications

1. Procédé de protection vis-à-vis du gel d'un dispositif de chauffage solaire comprenant au moins une cuve (1 ; 2 ; 3) de stockage d'eau chauffée, cette cuve de stockage étant munie d'un conduit (4 ; 6 ; 7) d'alimentation en eau à chauffer et d'un conduit (6 ; 7 ; 5) d'évacuation de l'eau chauffée, **caractérisé en ce qu'**il est prévu des moyens (8) électriques de chauffage qui sont activés périodiquement pour dégivrer le conduit (4 ; 6 ; 7) d'alimentation et/ou le conduit (6 ; 7 ; 5) d'évacuation de la cuve (1 ; 2 ; 3) de stockage.

2. Procédé suivant la revendication 1, **caractérisé en ce que** l'on commande les moyens (8) électriques de chauffage par une unité (10) de commande qui est reliée à un capteur (12) de température.

3. Procédé suivant la revendication 2, **caractérisé en ce que** le capteur (12) de température mesure la température du conduit (4 ; 6 ; 7) d'alimentation ou du conduit (6 ; 7 ; 5) d'évacuation le plus critique.

4. Procédé suivant la revendication 2, **caractérisé en ce que** le capteur (12) de température mesure la température ambiante.

5. Procédé suivant l'une quelconque des revendications 2 à 4, **caractérisé en ce que** l'unité (10) de commande est intégrée au dispositif de chauffage solaire.

6. Procédé suivant l'une quelconque des revendications 2 à 5, **caractérisé en ce que** l'unité (10) de commande commande la durée pendant laquelle les moyens (8) électriques de chauffage sont activés et/ou l'intervalle de temps entre des périodes successives d'activation sur la base du signal provenant du capteur (12) de température.

7. Procédé suivant l'une quelconque des revendications 2 à 6, **caractérisé en ce que** l'unité (10) de commande envoie un signal d'avertissement, par exemple un signal acoustique ou un signal optique, lorsque le signal provenant du capteur de température n'est pas compris dans une plage de probabilité déterminée à l'avance.

8. Procédé suivant l'une quelconque des revendications 2 à 7, **caractérisé en ce que** l'unité (10) de commande envoie un signal d'avertissement, par exemple un signal acoustique ou un signal optique, si un signal indiquant une élévation de la température n'est pas reçu du capteur (12) de température après activation des moyens (8) électriques de chauffage.

9. Procédé suivant l'une quelconque des revendications 2 à 8, **caractérisé en ce que** l'unité (10) de commande comprend des moyens pour emmagasiner de l'énergie électrique, tels qu'un condensateur ou analogue, qui peuvent être reliés au moyen d'avertissement dans le cas d'une interruption de l'alimentation en courant du dispositif de chauffage solaire.

10. Procédé suivant l'une quelconque des revendications précédentes, **caractérisé en ce que** les moyens (8) électriques de chauffage consistent en une tige de chauffage d'une grande capacité, qui est disposée dans le conduit en question.

11. Procédé suivant l'une quelconque des revendications précédentes, **caractérisé en ce que** les conduits (4 ; 6 ; 7) d'alimentation ou les conduits (6 ; 7 ; 5) d'évacuation respectifs sont munis de moyens pour empêcher ces conduits de se fendre sous l'effet du gel.

12. Procédé suivant la revendication 11, **caractérisé en ce que** les moyens consistent en des corps (30) compressibles, tels que des tuyaux en caoutchouc ou analogue adaptés dans les conduits en question.

13. Procédé suivant la revendication 11, **caractérisé en ce que** les moyens consistent **en ce que** les conduits en question sont tels que de la glace qui s'y forme est envoyée à la cuve (1 ; 2 ; 3) de stockage.

14. Procédé suivant l'une quelconque des revendications précédentes, **caractérisé en ce que** les conduits (23 ; 24) d'alimentation et d'évacuation s'étendent sur une certaine distance vers la cuve de stockage respective et il est formé des ouvertures (26) dans les conduits (23 ; 24) d'alimentation et d'évacuation directement voisins de la paroi intérieure de la cuve de stockage.

15. Procédé suivant l'une quelconque des revendications précédentes, **caractérisé en ce que** les moyens (8) électriques de chauffage sont activés pour empêcher les conduits en question de givrer.

16. Procédé suivant l'une quelconque des revendications précédentes, **caractérisé en ce que** la paroi (15) de la cuve de stockage est en un matériau ayant une conductivité thermique très petite à l'emplacement où les conduits (23 ; 24) d'alimentation et d'évacuation traversent la paroi (25).

17. Procédé suivant l'une quelconque des revendications précédentes, **caractérisé en ce que** les extrémités des conduits (23 ; 24) d'alimentation et d'évacuation situés dans la cuve de stockage sont disposées à un niveau plus haut que les parties de ces conduits à l'extérieur de la cuve.

18. Procédé suivant l'une quelconque des revendications précédentes, **caractérisé en ce que** la cuve de stockage est munie de moyens (28) qui en permettent la dilatation plastique, tels que des profils de paroi ondulés, nervurés ou en accordéon.

19. Procédé suivant la revendication 18, **caractérisé en ce que** le dispositif de chauffage solaire comprend des moyens (29) pour indiquer une déformation plastique de la cuve de stockage.

20. Procédé suivant l'une quelconque des revendications précédentes, **caractérisé en ce que** le dispositif de chauffage solaire comprend un certain nombre de cuves (1 ; 2 ; 3) de stockage montées en série, qui sont reliées entre elles au moyen de conduits (6 ; 7) de liaison, ces conduits de liaison formant les conduits d'alimentation et les conduits d'évacuation respectifs pour des cuves (1 ; 2 ; 3) de stockage successives.
